# EUROPEAN PATENT SPECIFICATION

(11) **EP 1 090 176 B1**
(45) Date of publication and mention of the grant of the patent: **06.03.2002**
(21) Application number: 99916811.5
(22) Date of filing: 29.04.1999
(51) Int. Cl.: D04H 1/42, D01B 1/10, D21C 5/00

(54) **METHOD FOR MANUFACTURING A FIBRE MAT**
VERFAHREN ZUR HERSTELLUNG EINER FASERMATTE
PROCEDE DE FABRICATION DE MAT DE FIBRES

(30) Priority: 01.05.1998 DK 60998
(43) Date of publication of application: 11.04.2001
(73) Proprietor: Eriksen, Marianne Etlar, 8410 Rönde (DK)
(72) Inventor: PALLESEN, Bodil, Engberg, DK-8410 Ronde (DK)
(74) Representative: Nielsen, Leif L.
(86) International application number: DK9900239
(87) International publication number: WO9957353

(56) References cited:
- WO-A1-91/08332
- WO-A1-95/01468
- WO-A1-96/33306
- WO-A1-97/19221
- WO-A1-98/01611
- DE-A1- 4 341 725
- DE-A1- 4 416 805
- DE-A1- 19 501 618
- DE-A1- 19 541 626
- FR-A1- 2 620 896

## Description

### Background of the invention

The present invention concerns a method for manufacturing a fibre mat using vegetable fibres. More specific, the invention concerns a use of flax fibres and hemp fibres for manufacturing fibre mats which are made by using fibres which are shortened and separated and which afterwards are used for manufacturing the fibre mat. The plant fibres are used as substitute for mineral wool fibres, wooden fibres, wooden cellulose, synthetic fibres etc.

It is known to use plant fibres by the making of fibre mats. Such were formed by carding the fibres. Thereafter a fur is formed and finally a needling is performed for making the finished fibre mat. Such a method is connected with several drawbacks. It has thus been necessary to have a precise degree of humidity in the flax out of consideration to the pliability in order to perform the needling process. However, a necessary dry condition will result in decomposition of flax fibres and thereby cause dust formation and formation of short fibres which very easily could be torn out of the formed fibre mat. It has thus been an expensive process, and at the same time there has been a risk of dust formation from the formed fibre mat.

The manufacture of the known carded fibre mats will cause that the fibres are lying in separate piles so that there is no strong bonds between the single layers in the fibre mat. Furthermore, there is used relatively long fibres, which typically will be between 100 - 150 mm, but may be up to 200 mm. Fibre mats of flax and hemp are made traditionally from tow which is a by-product when making long fibres for carding and spinning. This takes place at flax scutching mills. The process is expensive and difficult and therefore tow together with long textile fibres from plant fibres, such as flax and hemp, are relatively expensive. Furthermore, the known technique has great requirements to the quality of raw materials, including the degree of retting of the raw materials.

Flax plants can have a stem with a length between 600 and 800 mm. The stem has strong fibre bundles running from root to top. These fibre bundles (fibres) are disposed outermost in the stem, and in the interspace between the fibre bundles there is a central stalk consisting of wood cells which after exposure of fibres gives the so-called shives.

Hemp plants have stems which are considerably longer than the stem of the flax plants. They may have lengths up to 2,000 - 3,000 mm. In principle, the hemp stem is build up in the same way as flax with the fibre bundles outermost. Innermost is situated the wood containing wood cells (shives) consisting of short fibres with a length of 0.5 - 0.6 mm (elementary fibre length).

In order to separate the flax fibres from the wood fibres in the stem, it has to be subjected to a retting which is a microbiological process. Traditionally this takes place on the field by dew-retting. By the retting hemicellulose and pectin binding together the fibres and the wood parts are decomposed. The degree of retting is all decisive in the making of textile fibres for carding and spinning. Thus the border between a well retted and over retted fibre is very narrow. This is a difficult process to control because it will be a biological process in the nature that determines the quality.

By the present invention there is not the same requirement to a specific degree of retting. By the process according to the present invention it is thus possible to use a traditional retting or a controlled retting, for example in water containing enzymes. It is thus possible to expose and use fibres from a completely un-retted to a strongly over-retted quality depending on the purpose of use. It is thus possible to use stems that are not retted, which have been dew-retted on the field, or which have been retted by a controlled retting. After the retting and drying, flax is subjected to a mechanical treatment for separating the fibre bonds from the shives. The formed fibres may be shortened by cutting in order to form the desired lengths of fibre.

By a slight retting and subsequent mechanical and possible chemical treatment it is possible to decompose the fibre bundles and form single fibres. The single fibres may be used performing more airy products than is the case when making products from fibre bundles. However, it has been stated that the formed single cell fibres are not suitable for making fibre mats by the known needle processes because of the shortening into lengths making them unsuitable for carding.

By the present invention there is focused especially on flax fibres and hemp fibres, but the invention may also be used in connection with other plant fibres with a structure corresponding to the one known from flax and hemp plants.

There is a wish of a new method whereby plant fibres, preferably flax fibres and hemp fibres, may be utilised for making fibre mats, which is not connected with the drawbacks of known carded or needled fibre mats, and which also may be used industrially in a long series of products.

A method in which the carding and needle process has been left out has thus been proposed previously. From WO 98/01611 there is thus known a method for making a fibre product where the fibres are pre-treated with the combination of retting and mechanical decomposition. The formed fibres are afterwards formed to the final product by a dry forming process. However, there is no specific indication of subprocesses for providing fibres with the properties which are desirable in the final product. Furthermore, the described method is based on the use of relatively long fibres which may have a length corresponding to the fibres from a carding process. Such long fibres may cause difficulties in the process steps forming a part of the method. Furthermore, there is no direction for harvesting the fibres in an effective way on a suitable process step under consideration of the subsequent treatment.

In WO-A-9633306 a thermal-insulation element is disclosed which is made of vegetable fibres and consisting of a non-woven with a random three-dimensional structure. This document discloses the use of very long vegetable fibres and of thermoplastic fibres used to assure the bonding of the fibres in the non-woven. As mentioned above long fibres may cause a difficulty in the process step for laying the fibre element.

It is thus an object of the invention to indicate a method for manufacturing a new kind of fibre mat and to indicate subprocesses which are advantageous at the providing of the fibres with a quality being suitable in the process and which results in final products with the desired properties. It is furthermore an object to indicate a fibre mat which is made by the method and to indicate a specific use of such a fibre mat.

The object of the invention is achieved by a method mentioned by way of introduction, which method comprising the steps of: harvesting the plants by cutting and threshing, retting wholly or partially the plant stems, drying them for providing a desired water content, shortening and separating the fibres for establishing a fibre mass comprising mainly single fibres with lengths within the desired interval between 0.1 and 30 mm and for creating their fibrillation, forming the mat by a dry forming process whereby the fibres are randomly oriented and the mat is fixed, as inter-fibre bonds at least partially are established between the single fibres without the need of a binder as these are more or less fibrillated.

With this method there is thus established a pre-treatment, where the fibres are shortened and separated for forming a fibre mass mainly containing single fibres with lengths within the desired interval with a length being so short that they are not suitable for carding. A shortening may be performed arbitrarily in suitable equipment, as the subsequent process do not require carding and thereby do not necessitate a certain length of the fibres. By the shortening, a fibrillation takes place which causes that the single fibres at the subsequent dry-forming process may form a sheet which is cohesive without need of a binder, as fibre bundles mesh with each other. Thus there is established inter-fibre bonds in the form of fibre-to-fibre bonds between the single fibres. The formed mat do not need to be needled and the dry-forming process also takes place without steam bonding of the fibres. We are thus speaking of a very simple procedure for forming the fibre mat. The formed fibre mat is airy and voluminous and may be compacted to the desired degree, depending on the intended use. It will also be possible to add binder in a greater or lesser amount depending on the desired use of the finished product.

Traditional harvesting of flax and hemp for textile production takes place by pulling which is a slow and work intensive process. After the pulling where all of the plant is pulled up, it is laid aside for retting. Subsequently the stems are pressed into bales and driven to fibre factory. The seeds are torn off in a scutching mill and the straws are processed by placing the stems in parallel and treating them in parallel through processing equipment.

As a difference from the above-mentioned traditional harvest with pulling, by the method according to the present invention there may be established a pretreatment/harvest of flax in an untraditional way. This takes place for flax by cutting off the flax plant, for example by laying it in swaths, where after the flax seeds are threshed, preferably by combined harvesting. The flax stems lie a suitable time after the harvest of seeds whereby retting takes place to the desired extent. Thus, if un-retted flax fibres are desired, the flax straws are gathered immediately after threshing. The stems are gathered for pressing or gathered by a combined cutting and pressing.

Hemp is harvested by cutting, for example by laying in swaths, in two or more rounds. Thus, the first cutting may take place with a remaining stubble of about 1 m in height and thereafter a laying swaths with a stubble of about 0.2 m in height. After being cut off, the hemp stems are lying a suitable time for retting. Then the stems are pressed into bales and cut and dried before further processing for forming single fibres as described above, for example by shortening and scutching in a hammer mill/beater mill and subsequent separation in a riddle, for example a rotating riddle.

The pre-treatment of the stems comprises shortening and separation. In practice it has appeared that a hammer mill is suitable for shortening and simultaneous scutching of the stems. Alternatively, the stems may be cut before the hammer mill as mentioned in connection with harvesting methods. It has appeared to be possible to keep a high capacity and a uniform quality irrespectively how the stems are fed into the hammer mill. There is thus not a need for a slow feeding in parallel of the stems used on traditional flax scutching mills.

The scutching, that is the liberating of the wood parts from the fibre bundles/single fibres, is very effective when working with high rpm's on the mill. With this process the stems are shortened so that the main part of the formed fibres have a length between 0.1 and 30 mm and preferably between 4 and 15 mm. This scutching or fibre exposure is completely different from the traditional scutching where very long plant fibres are produced for carding and spinning.

The cleaning of shives from fibres may take place with a rotating riddle or the like. In practice it is difficult to clean the fibres completely from shives and fibre dust. However, it will be possible to have a lesser part remaining in the fibre mass without this reducing the quality of the formed fibre mat. Thus, to a certain extent, shives may be used at the subsequent manufacture of the fibre mat.

For some fibre mats where use of pulping of the plant fibres is desired, for example for fibre absorbent, there is performed a further pre-treatment of the fibres before the forming of the fibre mat. Pulping may be performed as the fibres are boiled in water under pressure or boiled in an extruder. Furthermore, they may be treated chemically, for example by adding a base to the water. Thereafter the formed fibres are washed and dried before they subsequently are used for dry-forming. Alternatively, there may also be performed a wet cleaning of the fibre mass in this manufacturing step. Thus the fibres which are cleaned through a riddle and pulped, may be fed to a hydrocyclone, whereby it has appeared to be possible by cleaning to remove a very large part of the shives in the finished pulp. It has thus appeared possible to make a pulp which only has a content of up to 0.1 % shives. As the shives are removed, the strength is increased in the subsequently formed fibre mat, as the fibre mat will contain more fibres for fibre bonds, as the fibre mat contains more fibres per area unit, because the weight of one shive corresponds to the weight of a large number of fibres. In practice it has appeared possible to increase the strength in the finished product by cleaning off shives in a hydrocyclone. Because the capacity in the hydrocyclone is low, it is advantageous to clean off as many shives as possible by the dry process. The subsequent treatment/cleaning in a hydrocyclone will thus preferably take place in connection with methods where the pre-treatment of the fibres comprises a pulping.

The formed fibres are then used for forming the fibre mat by a dry-forming process which substantially corresponds to a dry-forming process used in the dry-forming of paper.

The formed single fibres will be more or less fibrillated which increases the tendency of the fibres being able to wind and roll into each other. Thus there is automatically achieved inter-fibre bonds in the fibre mat. For some application areas it will thus not be necessary to add binders. However, it will also be possible to add binders in order to form inter-fibre bonds between the single fibres. The appearing fibre mat will thus have a homogenous cohesive structure through the whole thickness.

The binders that can be used may be organic binders, synthetic organic binders, or natural binders. As binders may be used polymers, for example thermoplastic. Especially at the forming of composite products and high strength products where the formed fibre sheet may be said to be a fibre reinforcement situated in a matrix of polymers, there may be used relatively large amounts of the binders. In such products there will thus be used up to 50% binders in relation to the finished product.

The binders may also be provided in the form of synthetic fibres, for example bicomponent fibres consisting of polypropylene and polyethylene, polyester, vinyl etc. In such a situation the fixation of the sheet will take place by heating up to the melting temperature of the plastic, whereby inter-fibre bonds are established. As examples of natural binders can be mentioned starch and lactic acid products. Such binders may be added as a part up to 5-15%.

The amount and type of binders added will thus depend on the intended use of the formed fibre mat. A fibre mat intended for isolation mats will thus contain very little or no binder. Contrary to this, a composite sheet, for example, has properties corresponding to those known from fibre and chip-boards will contain a larger amount of binder (10 - 50%), and binder and fibre mat will go through a compression simultaneously with the establishing of the inter-fibre bonds. Hereby a compact and strong sheet is formed.

Furthermore, it will be possible to vary the properties of the formed product by changing the length of the fibres in the product. Thus for certain products it will be advantageous that a part, for example of 10% or more, of the shives from the separation process is fed to the dry-forming process so that a more compact and strong fibre mat is formed.

If airy and soft fibre mats are desired, shives are not added and at the same time there is not performed any noticeable compacting of the dry-formed layer. Furthermore, for such airy products there will be used plant fibres, preferably flax fibres, that are suitable retted so that they after shortening and separation contain many fibrils contributing to obtain a cohesive fibre mat which at the same time is airy.

By the method according to the invention, the fibre mats may be produced considerably cheaper than carded/needled fibre mats. The fibres may be formed to a fibre mat with the addition with very little binder as compared to forming of corresponding fibre mats formed of wood fibres because of the longer fibre length of the shortened plant fibres. Thus wood fibres will typically have a length between 1 and 3 mm, which is considerably different from the typical length of plant fibres, which as mentioned above will be especially between 4 and 15 mm.

As mentioned, the fibre mat may be made without the use of binder or with a very little amount of binder. When making fibre mats for isolation purposes an addition of binder in a part of 0 - 15%, preferably of 2 - 3%, will be enough to establish a cohesive fibre mat of flax and hemp fibres which are easy to handle. In comparison, a corresponding isolation plate made from wood fibres will normally contain 15 - 20% binder, which increases the price of the product.

As mentioned, the fibre mats may be made airy and soft by the use of retted fibres resulting in many fibrils by the shortening/separation. If the plant fibres only are slightly retted or not retted, many of the plant fibres will still be cohesive in fibre bundles. This gives a more hard and rough fibre mat as the formed fibre mass will contain a relatively larger part of fibre bundles than single fibres.

A fibre mat containing fibre bundles will be less soft and dense. However, the fibre strength in such a fibre mat is greater. This will make it suitable for making plates to where greater strength is required. By regulating the pre-treatment in a form of degree of retting, possibly combined with chemical and/or enzymatic treatment, it will thus also be possible to influence the properties in the formed fibre mat.

The properties in the fibres may thus be combined, depending on the field of application.

The fibre bundles will comprise a few single fibres or up to a maximum of 10 - 30 single fibres.

The fibre mats will usually be made of fibres which are hydrophobic as fibres from flax and hemp to a greater or lesser degree are hydrophobic. A hydrophobic fibre mat is thus formed by the use of fibres which are only treated mechanically (not chemically). I.e. the stems are retted in a shorter or longer period of time and dried down to a water content between 8 - 18%, preferably between 10 - 16%. The degree of hydrophobicity depends on the raw material quality. The stronger retting, the lesser degree of hydrophobicity. The fibres may absorb humidity from the surroundings and give off the humidity again and will be resistant to rot and attacks from mould fungus at normal atmospheric humidity.

Alternatively, it will also be possible to make fibre mats where the fibres have been made hydrophilic. It will thus be possible to pre-treat the fibres via a pulping or enzyme treatment, a washing and a drying in order to further process the fibres to cellulose. This may take place by boiling in water under pressure or by boiling in extruders. Such a pre-treatment may be performed with or without addition of pulping chemicals, as for example sodium hydroxide.

A fibre mat made according to such a method may for example be used where there is a need for an absorbing effect, as for example sanitary tissues, napkins, tissue paper etc.

The dry-forming process makes it possible to make the fibre mat with greater or lesser degree of compacting and with greater or lesser thickness. It will thus be possible to make the fibre mats with thicknesses from 2 - 5 mm and up to thicknesses of 2 - 300 mm or even thicker. The formed fibre mats may be manufactured with compacting from gram weights of 30 g/m² to gram weights of 3000 g/m² or more. For example, mats for use in moulded composite elements may be manufactured with gram weights up to 8000 g/m².

Furthermore, by the making of the fibre mat it will be possible to admix paper wool, binders (synthetic fibres or organic binders), shives from flax or hemp, wood fibres, or to admix fire-retardants by making isolating mats with fire-resistant properties. The formed fibre mats may thus be added fire-resistant materials, as for example salts as borax and boric acid, aluminium hydroxide, ammonium phosphate, ammonium sulphate, or others, for example in amounts of 0 - 15% of the total weight of the mat.

By making fibre mats in an airy form they may thus be used as isolating mats for substituting isolating mats made of mineral wool and glass wool. The formed fibre mats may furthermore be used as building plates, as substitute for fibre boards and chip-boards by adding shives, binders, and by performing a pressing of the formed fibre mat.

The fibre mat formed by a method according to the invention may contain up to 100% flax fibres or hemp fibres or a combination of these fibres. Furthermore, the fibre mats may be made with admixing of other fibres, which may be organic or inorganic. Even though it is preferred to produce the fibre mats from plant fibres formed by the method according to the invention of economic reasons, it will also be possible to use plant fibres made into long fibres, so-called tow.

Thus it will be possible to use tow from the textile industry stemming from flax as well as hemp and where the tow, for example in hammer mills, is shortened to the desired fibre lengths before forming the fibre mat by the dry-forming process.

The fibres that may be used by the method according to the invention may have different compositions:
- shortened fibres, that are retted or unretted, consisting of cleaned flax and/or hemp fibres admixed with up to 10% shives,
- shortened fibres, that are retted or unretted, primarily as single fibres, consisting of flax and/or hemp fibres admixed shives from flax and/or hemp with up to 90% shives,
- short fibres, that are retted or unretted, primarily as fibre bundles and shives from flax and/or hemp,
- shives separated by cleaning flax and/or hemp, or
- a dust fraction separated by cleaning consisting of very short fibres together with shives.

The fibre quality will depend on the desired properties by the formed final product. By an advantageous method for making fibre mats which are suitable as isolating mats, the plant stems are dried to a water content between 10 and 16%. Then the stems are scutched and shortened in a hammer mill so that the main part of the fibres preferably have a length between 3 and 20 mm, where the fibres will have an average length between 4 and 15 mm. This takes place advantageously by using a rotating riddle. Then the fibres are dry-formed which preferably takes place by using a former head placed above a vacuum box wherebetween there is disposed a former wire on which the fibres are deposited and held by a vacuum. The setting takes place by compacting together with addition of 0 - 5% binder. Alternatively, there may still be used up to 50% binder, if there is especially great requirements to the handiness of the formed fibre mat.

A fibre mat formed by the method according to the invention do not need to be a plane plate or sheet. Thus it will be possible to perform a final treatment simultaneously with the setting or in immediate connection with setting of the inter-fibre bonds.

Thus it will be possible to impart a spatial form to the fibre mat, for example a wave form which makes it suitable as reinforcing fibres in a composite plate, for example a high-strength composite plate or a workable composite plate. Alternatively, the fibre mat may be shaped to receive the form of a desired packing, for example the form of a box or a cup. Thus a fibre mat, being stable of shape and firm, could be used in making packing products or plant pots. The packing/plant pot may be formed by a pressing operation in immediate connection with the setting step.

The method according to the invention will be described more closely by means of the following examples.

### Example 1.

This example illustrates a method for making a fibre mat of flax for use as isolating mats as a substitute for mineral wool. Straw from flax, both oil and spinning flax as well as hemp, may be used. The best fibres are obtained from spinning flax which is well retted and possibly hemp if this is retted sufficiently. Here is given an example of making fibre mats for isolation on the basis of spinning flax:

The flax stems are laid in swaths and after about 10 days on the field the seed are combine harvested with a usual combine. Hereafter the straw lie in a straw run/swath on the field and is retted. The retting process may be watched by noting a change in colour on the straw. The desired degree of retting has been achieved when the colour on the straw/fibres changes to light grey. It may be necessary to turn the swath in order to ensure a uniform retting.

The retting process is watched closely and daily there is taken samples in order to as-certain how far the retting process in the hand scutched straw is advanced.

When the desired change of colour has appeared, the straw is gathered by pressing into bales, preferably round bales, normally this takes place at a dry content of about 85% in the straw (15% water).

The bales are transported to the factory where they are dried down to 12% water content. After drying, the bale is unrolled/cut up and the flax straw is fed into the hammer mill where the scutching takes place. From the mill the fibre mass, which now consists of fibres as well as wooden parts/shives, is fed via a cyclone into a rotating riddle whereby the shives together with dust is separated. The now woollen fibre mass has an average length of about 4 - 15 mm. Some fibres, however, are longer. The length of fibres may to a certain degree be adjusted by regulating the riddle on the hammer mill and by regulating the adjustment of the riddle by the subsequent sorting on the rotating riddle. Normally fibres are cleaned down to a content of 5% shives. By a further cleaning there is obtained a comparatively larger loss of fibres.

The cleaned fibre mass is transported via pipes to the mat plant where a dry-forming takes place. This occurs, for example, by using a former head placed above a vacuum box where between there is disposed a former wire on which the fibres are deposited and held by a vacuum. The mat plant is adjusted to forming a fibre mat/mat in the desired height. This is regulated by means of the speed whereby the fibre feeder (bale breaker) is dosed via a transport blower to the former head. At the same time the advancing speed on the wire is regulated.

If a mat for use as isolation of ceilings and walls etc. is desired to be made, the height of the fibre mat is regulated to for example 200 mm with a desired gram weight of for example 3000 g/m². For certain isolation purposes there is desired as light a fibre mat as possible, and under these conditions the fibre mat is not compacted.

If the making of a fibre mat is desired, being more compact and possibly of lesser height, this takes place by regulating the degree of compaction of the fibre mat before, after, or during a possible setting which preferably is performed in an oven.

During the process, where the fibres fall out on former wires and are advanced, 2 - 3% binder, for example in the form of a by-component consisting of polyethylene and polypropylene, is added. Setting of the fibre mat takes place by heat treatment in an oven at about 145°C or other temperature depending of binder type, i.e. the fibre mat is led via a former wire through an oven with desired temperature.

During the process (before setting in oven) possible fire-resistant fabrics are added, as for example salts as borax (0 - 15%), boric acid (0 - 15%), aluminium hydroxide (0 - 15%) or others. The salts may fall down into the fibres or be sprayed on the fibres.

After setting of the fibre mat, it is rolled up via a roller and is packed or cut into shape. During this process the fibre mat may be rolled hard together. When unrolling, the fibre mat reaches the same size and volume as before the rolling as the fibre mat puffs up.

The finished fibre mat is soft and supple. Depending on the degree of retting, the colour will be yellowish/light grey to a darker grey. The fibre mat could be manufactured at a cheaper price than the usual needle carded fibre mats. The fibre mat has a heat isolation corresponding to a lambda value of -0.40. The fibre mat repels humidity immediately because of hydrophobic properties, but the fibre mat is still capable of taking up and giving off humidity with the surroundings.

### Example 2.

This example illustrates the method for producing a fibre mat on the basis of flax cellulose for use in the tissue industry, as for example absorbing paper or as cover stocks.

The fibres are produced as above in example 1 described before the forming of mats. The degree of retting may be from the quite unrettet to strongly retted fibres. The woollen fibres now cleaned are subjected to pulping. This may take place by boiling in water under pressure or by boiling in an extruder. The pre-treatment is carried through with or without addition of pulping chemicals as for example caustic soda (sodium hydroxide). The treatment in extruder may proceed at a relatively high level of a dry matter, about 10%, but also at a lower percentage of dry matter.

If extrusion treatment is used, impregnation of the fibres takes place simultaneously with the cutting up of the fibre mass. After extrusion treatment, the fibre mass is conveyed into a container and boiled about 1 hour at about 100°C. Subsequently, the pulp is cleaned for remains of sugar and lignin. The fibre mass now consists of a homogenous distribution of fibres in a slurry containing from 0 - 5% impurities primarily stemming from the shives. These may be cleaned off via centricleaning in a hydrocyclone. The pulp may possibly previous to the cleaning in a hydrocyclone be refined in a refiner if fibrillation of the fibres is desired. For example a disc refiner, "wide angle" refiner, or for example a cutter mill.

After pulping, the flax pulp consists of almost pure cellulose with a content of 80 - 95% cellulose. The dry matter yield is between 75 - 90%. The distribution of the fibre length has been measured with Bayer McNett index between 200 - 300, preferably between 240 - 280. The strength in the flax cellulose has been measured in Nm/m²/cm² from 100 - 160, or more.

If bleached pulp is desired, 2 % peroxide may be added and there is achieved a blightness of about 75.

The finished pulp is dried and defibrated in a beater mill/hammer mill, if the fibres are desired to be completely defibrated before forming into a fibre mat. The forming takes place as described in example 1, but, depending on the application, there is produced a thinner mat as for example for use as absorbing paper for use in sanitary tissues and the like (about 70 - about 200 g/m²). A very thin mat (20 g/m²) can be used as coverstock by admixing about 15% or less hydrophobic binders.

Even without bleaching the pulp, the products are very bright, from light grey to whitish.

### Example 3.

This example illustrates a method for making moulded composites on the basis of the fibre mat of hemp or flax.

As a basis for achieving a fibre plate with high strength, it is possible to use comparatively unretted fibres, possibly admixed with shives. The fibre strength in unretted to slightly retted fibres is higher than for strongly retted fibres. Flax as well as hemp will be suitable raw material because of the high strength of the fibres. The wood parts cleaned off, shives, could also be used for composites corresponding to chip-boards.

The fibre mat is made as above in example 1 described before the forming of a mat. There is produced a fibre mat of desired height and gram weight, for example 300 g/m². By the use of comparatively unretted flax or hemp, the fibre mat is very stiff and hard. The shives content may be adjusted according to wish. The higher content, the stiffer mat before moulding.

During the mat making, a so-called plant fibre compatilizer is sprayed on, i.e. a chemical modification with for example isocyanate (about 1 - 2%) in order to ensure the hydrophobic fibres obtain a surface which is compatible with traditional binders like formaldehyde etc. used as binder in the fibre plate. Instead of adding a formaldehyde, EVA (evanylacetate) or natural binders may be a possibility.

Also, the fibres are glued before, under, or immediately after the mat making or immediately after pressing with heat, vacuum, or autoclave/moulding, as in the traditional methods for making of fibre plates and chip-boards.

The moulded composites based on hemp or flax fibres have a strength at level with hard masonite.

If a highly reinforced composite is desired made, there is used a greater part of organic binders as synthetic polymers comprising thermoplastics and thermosetting plastics, for example polypropylene, polyacetate and polyester. About 50% binder is added. The additional binder takes place during the mat making, and the fibre mat is pressed subsequently with high pressure into the desired shapes. The shaping proceeds as described under example 1.

The highly reinforced composites have a strength at a level with glass fibre and are useful as substitution for plastic composites and glass fibre composites.

## Claims

1. A method for manufacturing a fibre mat using vegetable fibres comprising the steps of: harvesting the plants by cutting and threshing, retting wholly or partially the plant stems, drying them for providing a desired water content, shortening and separating the fibres for establishing a fibre mass comprising mainly single fibres with lengths within the desired interval between 0.1 and 30 mm and for creating their fibrillation, forming the mat by a dry forming process whereby the fibres are randomly oriented and the mat is fixed, as inter-fibre bonds at least partially are established between the single fibres without the need of a binder as these are more or less fibrillated.

2. A method according to claim 1, **characterised in that** the fibres are shortened to a length between 3 and 20 mm and especially between 4 and 15 mm.

3. A method according to claim 1 or 2, **characterised in that** the fibres are retted partially on the field and that they afterwards are imparted a further controlled retting in water containing enzymes before the shortening.

4. A method according to any preceding claim, **characterised in that** organic binders, synthetic organic binders or natural binders can be added.

5. A method according to any preceding claim, **characterised in that** the fibres are selected among flax and hemp.

6. A method according to any preceding claim, **characterised in that** the stems are scutched in a hammer mill and shortened to a desired length, that fibres within a desired length interval are separated by use of a rotating riddle, that the fibre fraction is dry formed into a mat as the fibres are blown into a forming head disposed above a forming wire.

7. A method according to any preceding claim, **characterised in that** between 0 and 50 % binder can be added.

8. A method according to any preceding claim, **characterised in that** the formed mat contains between 0 and 10 % shives.

9. A method according to claim 1, **characterised in that** shortening and separation of fibres is performed in the dry condition, and that the method further comprises pulping of the fibres as the fibres are boiled in pure water under pressure or boiled in an extruder, that they are treated chemically, for example by adding base, that they are washed and that they are dried before the formed fibres are dry formed.

10. A method according to any preceding claim, **characterised in that** a non-woven mat is made with a thickness between 2 and 300 mm and with gram weights between 30 and 8000 g/m² in said forming step.

## Patentansprüche

1. Verfahren zur Herstellung einer Fasermatte unter Verwendung von Pflanzenfasern, umfassend die Schritte: Ernten der Pflanzen durch Schneiden und Dreschen, Verrottenlassen der Pflanzenstiele im ganzen oder teilweise, Trocknen dieser zum Bereitstellen eines gewünschten Wassergehalts, Kürzen und Trennen der Fasern, um eine Fasermasse, umfassend hauptsächlich Einzelfasern mit Längen innerhalb des gewünschten Intervalls zwischen 0,1 und 30 mm zu erhalten und zum Erzeugen ihrer Fibrillierung, Formen der Matte durch ein trockenes Formverfahren, wobei die Fasern statistisch orientiert sind und die Matte fixiert wird, da ohne den Bedarf eines Bindemittels zumindest teilweise Zwischenfaserbindungen zwischen den Einzelfasern, da diese mehr oder weniger fibrilliert sind, aufgebaut werden.

2. Verfahren nach Anspruch 1, **dadurch gekennzeichnet, daß** die Fasern auf eine Länge zwischen 3 und 20 mm und insbesondere zwischen 4 und 15 mm gekürzt werden.

3. Verfahren nach Anspruch 1 oder 2, **dadurch gekennzeichnet, daß** man die Fasern teilweise auf dem Feld verroten läßt und daß sie danach, vor dem Verkürzen, einem weiteren kontrollierten Verrotten in Enzyme enthaltendem Wasser unterzogen werden.

4. Verfahren nach mindestens einem der vorhergehenden Ansprüche, **dadurch gekennzeichnet, daß** organische Bindemittel, synthetische organische Bindemittel oder natürliche Bindemittel zugegeben werden können.

5. Verfahren nach mindestens einem der vorhergehenden Ansprüche, **dadurch gekennzeichnet, daß** die Fasern aus Flachs und Hanf ausgewählt werden.

6. Verfahren nach mindestens einem der vorhergehenden Ansprüche, **dadurch gekennzeichnet, daß** die Stiele in einer Hammermühle gehäckselt und auf eine gewünschte Länge gekürzt werden, daß die Fasern in einem gewünschten Längenintervall durch Verwendung eines rotierenden Siebs abgetrennt werden, daß die Faserfraktion trocken in eine Matte geformt wird, wenn die Fasern in ein über einem Formungsgeflecht angebrachtes Formungskopfteil geblasen werden.

7. Verfahren nach mindestens einem der vorhergehenden Ansprüche, **dadurch gekennzeichnet, daß** zwischen 0 und 50% Bindemittel zugegeben werden können.

8. Verfahren nach mindestens einem der vorhergehenden Ansprüche, **dadurch gekennzeichnet, daß** die Matte zwischen 0 und 10% Pflansenreste enthalten kann.

9. Verfahren nach Anspruch 1, **dadurch gekennzeichnet, daß** das Kürzen und Abtrennen der Fasern unter trokkenen Bedingungen durchgeführt wird, und daß das Verfahren weiterhin das Aufschließen der Fasern umfaßt, wenn die Fasern in reinem Wasser unter Druck gekocht werden oder in einem Extruder gekocht werden, daß sie chemisch z.B. durch Zugabe von Base behandelt werden, daß sie gewaschen werden, und daß sie, bevor die geformten Fasern trocken geformt werden, getrocknet werden.

10. Verfahren mach mindestens einem der vorhergehenden Ansprüche, **dadurch gekennzeichnet, daß** eine Non-woven-Matte mit einer Dicke zwischen 2 und 300 mm und mit Grammgewichten zwischen 30 und 8000 g/m² im Formungsschritt hergestellt werden.

## Revendications

1. Procédé de fabrication d'une natte en fibres utilisant des fibres végétales comprenant les étapes consistant à : récolter les plantes en les coupant et en les battant, rouir entièrement ou partiellement les tiges des plantes, les sécher pour fournir une teneur en eau souhaitée, raccourcir et séparer les fibres pour établir une masse de fibres comprenant principalement des fibres uniques ayant des longueurs comprises à l'intérieur de l'intervalle souhaité entre 0,1 et 30 mm et pour créer leur fibrillation, former la natte par un procédé de formation à sec moyennant quoi les fibres sont orientées aléatoirement et la natte est fixée, à mesure que des liens entre les fibres sont établis du moins partiellement entre les fibres uniques sans avoir besoin d'un liant puisque celles-ci sont plus ou moins fibrillées.

2. Procédé selon la revendication 1, **caractérisé en ce que** les fibres sont raccourcies jusqu'à une longueur comprise entre 3 et 20 mm et particulièrement entre 4 et 15 mm.

3. Procédé selon la revendication 1 ou la revendication 2, **caractérisé en ce que** les fibres sont rouies partiellement sur place et **en ce qu'**elles subissent par la suite un rouissage contrôlé supplémentaire dans de l'eau contenant des enzymes avant le raccourcissement.

4. Procédé selon l'une quelconque des revendications précédentes, **caractérisé en ce que** des liants organiques, des liants organiques synthétiques ou des liants naturels peuvent être ajoutés.

5. Procédé selon l'une quelconque des revendications précédentes, **caractérisé en ce que** les fibres sont sélectionnées parmi le lin et le chanvre.

6. Procédé selon l'une quelconque des revendications précédentes, **caractérisé en ce que** les tiges sont teillées dans un broyeur à marteaux et raccourcies jusqu'à une longueur souhaitée, **en ce que** des fibres à l'intérieur d'un intervalle de longueur souhaité sont séparées en utilisant un tamis rotatif, **en ce que** la fraction de fibres est formée par un procédé à sec en natte à mesure que les fibres sont soufflées dans une tête de mise en forme disposée au-dessus d'un fil de formation.

7. Procédé selon l'une quelconque des revendications précédentes, **caractérisé en ce qu'**entre 0 et 50 % de liant peut être ajouté.

8. Procédé selon l'une quelconque des revendications précédentes, **caractérisé en ce que** la natte formée peut contenir entre 0 et 10% de bûchettes.

9. Procédé selon la revendication 1, **caractérisé en ce que** les étapes consistant à raccourcir et à séparer les fibres sont réalisées à sec, et **en ce que** le procédé comprend en outre l'étape consistant à réduire en pulpe les fibres à mesure que les fibres bouillent dans de l'eau pure sous pression ou à mesure qu'elles bouillent dans une extrudeuse, **en ce qu'**elles sont traitées chimiquement, par exemple en ajoutant une base, **en ce qu'**elles sont lavées et **en ce qu'**elles sont séchées avant que les fibres formées soient mises en forme par le procédé à sec.

10. Procédé selon l'une quelconque des revendications précédentes, **caractérisé en ce qu'**une natte non tissée est réalisée avec une épaisseur comprise entre 2 et 300 mm et avec un grammage compris entre 30 et 8000 g/m² dans ladite étape de mise en forme.
